# EUROPEAN PATENT APPLICATION

(11) **EP 3 016 030 A1**
(43) Date of publication of application: **04.05.2016**
(21) Application number: 15190036.2
(22) Date of filing: 15.10.2015
(51) Int. Cl.: G06K 19/06, G06K 7/10, G06K 7/14

(54) **METHOD AND APPARATUS FOR STORING DIGITAL DATA AT A SURFACE OF A DATA CARRIER, AND METHOD AND APPARATUS FOR READING BACK DIGITAL DATA FROM AT A SURFACE OF A DATA CARRIER**

(30) Priority: 28.10.2014 EP 14306721
(71) Applicant: Thomson Licensing, 92130 Issy-les-Moulineaux (FR)
(72) Inventor: Huetter, Ingo, 30982 Pattensen (DE); Blawat, Meinolf, 30659 Hannover (DE)

(57) **Abstract**

For storing digital data at a surface of a data carrier (1208), it is proposed to use a block-wise transform pair (1204, 1212) between a spatial domain and a frequency domain to convert between information elements (1203, 1213) and recording elements (1205, 1211) at the surface of the data carrier (1208). This enables that isolated strong data carrier defects affecting a single recording element in a block are converted to smaller amplitude errors on all information elements of a block. For non-continuous-valued information elements (1203), these errors can be removed by quantization (1214).

## Description

### Field of the invention

The present invention relates to storing digital data on surfaces of data carriers, for example on optical microfilms.

### Background of the invention

Storing digital data, in particular binary data, as visible patterns at surfaces of data carriers has become widespread. QR codes are a popular example, where individual bits are encoded as small black or white squares on any kind of visible surface. While this is intended for storing a few bytes only, a similar approach can also be used for storing a much bigger amount of digital data on or at surfaces of materials like paper or film, as presented in Voges et al., "Applications of Data Storage on Cinematographic Film for Long-Term Preservation of Digital Productions", SMPTE Motion Imaging Journal, Vol 121(1), Jan/Feb 2012, pp. 39-42**.**

For increasing areal density, the physical size of individual recording elements on the data carrier must decrease. The smaller the recording elements are, the more often will strongly localized damages of the data carrier, like dirt or scratches, lead to difficulties when, during read back, it must be decided whether a single recording element is "white" or "black". The same holds for recorded multilevel data, where read back comprises a decision about which value out of a known finite set of values a recording element has. Such decision is also affected by local damages.

In an approach to deal with "linear" - in the sense of line-shaped - defects on a data carrier, US 6,456,798 says it discloses a method of placing a two-dimensional barcode symbol on a photographic element exhibiting linear defects in a predominant direction. By purposely distorting the symbol in a writing step, it is said that one can prevent the defects from affecting an entire row of symbol elements.

However, the problem still remains that, for direct recording of information elements as recording elements on a data carrier, isolated distortions or defects on the data carrier, having a size in the same order of magnitude as the information-bearing squares or recording elements, will lead to individual bits or information elements being wrongly read back. With other words, if digital data are directly stored at 2D surfaces or data carriers like microfilm, any impulse noise on the storage medium will directly and irreversibly destroy small parts of the recorded data.

It is thus desirable to find ways to overcome these detrimental effects.

### Invention

For storing digital data, the invention proposes, among others, to group the digital data as information elements into blocks of information elements; to transform the blocks of information elements into blocks of transform domain elements, and to use these transform domain elements as recording elements to be subsequently stored or written to at a surface of a data carrier instead of the information elements themselves.

Correspondingly, for reading back the digital data from at the surface of the data carrier, the invention proposes, among others, to read, from the data carrier, blocks of recovered recording elements, to inverse transform the blocks of recovered recording elements into blocks of original domain elements, and to quantize and deblock the blocks of original domain elements into recovered information elements.

In this approach, the transform used in storing has the property that each transform domain element at the output of the transform depends on all information elements at the input of the transform. Also, the inverse transform used in reading has the property that each original domain element at the output of the inverse transform depends on all recovered recording elements at the input of the inverse transform.

As a consequence of this, an isolated distortion or defect affecting only one of the recording elements at the surface of the data carrier will not damage a single information element strongly, but will instead lead to small errors on all original domain elements within a block as obtained at the output of the inverse transform. Having a thus reduced error amplitude, and exploiting the fact that the recovered information elements to be reconstructed are assumed to be binary or of a few distinct levels, the quantization and deblocking for converting the blocks of original domain elements into recovered information elements will quantize away the small errors so that the digital data are read back correctly. The recovered information elements are in this case identical to the information elements.

Accordingly, a method for storing digital information elements at a surface of a data carrier according to the invention comprises but is not limited to arranging the information elements into blocks; transforming the blocks of information elements with a transform having an inverse transform into blocks of recording elements; and storing the blocks of recording elements at the surface of the data carrier.

In this, it helps to understand the advantages of the proposed method, if the transform is assumed to be an Inverse Discrete Cosine Transform or IDCT-like transform. Formally, a transform of a sequence or vector of values can be described as a multiplication of the vector with a transform matrix, and the column vectors of the transform matrix are also denoted as basis functions of the transform. Of course, as widely known, with proper scaling DCT and IDCT can be made to be identical. Assuming an IDCT-like transform, for the case of binary information elements, each information element governs the presence or absence of one of the basis functions of the transform in the transform output.

A method for reading back digital recovered information elements from at a surface of a data carrier according to the invention comprises but is not limited to reading, from the data carrier, blocks of recovered recording elements; inverse transforming the blocks of recovered recording elements into blocks of original domain elements; and quantizing and deblocking the blocks of original domain elements into the recovered information elements.

If the transform is assumed to be IDCT-like, the inverse transform must be assumed to be DCT-like. Additionally assuming, just for the sake of illustration, that the information elements are binary, i.e. have one of two possible values, the act of inverse transforming the blocks of recovered recording elements amounts to analyzing, for all basis functions of the transform, whether or in which amplitude they are present or absent in the block of recovered recording elements.

A system for storage of digital information elements at a surface of a data carrier in accordance with the present disclosure comprises but is not limited to a storing apparatus equipped and configured to implement a storing method according to the invention; a reading back apparatus equipped and configured to implement a reading back method according to the invention; and a data carrier capable of holding, at its surface, continuous-valued data.

### Drawings

Exemplary embodiments of the invention are illustrated in the drawings and are explained in more detail in the following description.

In the Figures,
- Fig. 1: illustrates an example bit sequence comprising 64 bits;
- Fig. 2: illustrates the example bit sequence of Fig. 1 when arranged into a two-dimensional block of 8x8 binary information elements;
- Fig. 3: illustrates the block of Fig. 2 after scaling to the symmetric range of [-1 ... +1];
- Fig. 4: illustrates the transform domain elements that result from applying an 8x8 IDCT on the block of Fig. 3;
- Fig. 5: illustrates the transform domain elements of Fig. 4 after scaling to a range of [0 ... 1];
- Fig. 6: illustrates the block of Fig. 2 assuming an isolated error on the sixth bit of the sixth row;
- Fig. 7: illustrates the scaled transform domain elements of Fig. 5 after having suffered an assumed isolated error on the sixth element of the sixth row;
- Fig. 8: illustrates the result of applying an 8x8 DCT on the transform domain elements of Fig. 7;
- Fig. 9: illustrates the result of quantizing the values of Fig. 8;
- Fig. 10: shows a flowchart of the storing method; and
- Fig. 11: shows a flowchart of the reading back method.
- Fig. 12: shows a block diagram of a storing apparatus, a data carrier, and a reading back apparatus in accordance with the present disclosure.

### Exemplary embodiments

The way how the methods proposed here work, and how defects on the data carrier affect the decoding result, will in the following be explained using an examplary embodiment. In this embodiment, the information elements to be stored are assumed to be binary, i.e. bi-level data. However, the principle of the invention can also be achieved with information elements that are multi-level. More than that, it will become apparent that the present principles do not require that the number of levels were a power of two.

The terminology of recording, writing or storing "at" a surface of a data carrier, and correspondingly reading "from at" a surface of a data carrier, as used herein, shall be understood to comprise and describe the writing and reading irrespective of the precise physical and geometrical details, which depend on the underlying technologies. In ink based printing on non-absorbant material, the print can be truly said to be "on" the surface of the material. For ink print on more porous material, the print will rather be situated within a certain volume of the material, close to, parallel to and including its surface. A "print" created using photographic recording will be situated in a certain volume that is parallel to but may not comprise the surface. Even more so, colorizations created using color photographic print are situated in several distinct stacked layers or lamina parallel to the surface of the carrier, one for each primary color. Yet a different storage technology, namely stamper produced recordings on optical data carriers like CD or DVD, are manifest as a totally reflective layer at a varying depth within a certain volume parallel to but considerably away from the surface of the transparent carrier material. The terminology shall encompass all these.

A square block size of 8 lines by 8 columns is used in the example embodiment. However, the principle of the invention can also be achieved with other block sizes. Blocks can be two-dimensional, but also one-dimensional, three-dimensional or of any other dimension.

The known Inverse Discrete Cosine Transform IDCT is used as the transform for this example embodiment, and the known Discrete Cosine Transform DCT is used as its inverse transform. However, the principle of the invention can also be achieved with other transforms like Discrete Sine Transform DST or Hadamard Transform, and their respective inverses.

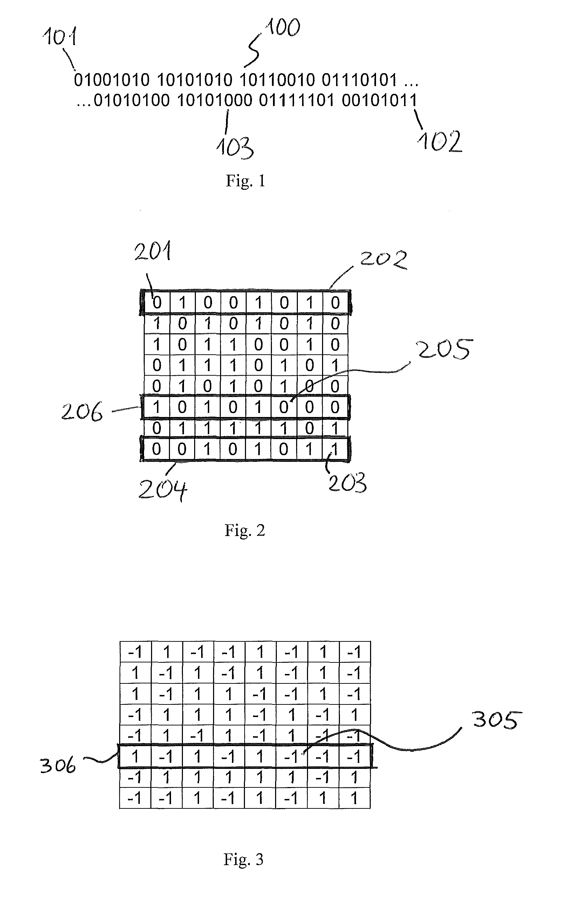

**Fig. 1** illustrates an example bit sequence **100** comprising 64 bits. It is these bits that constitute the digital data also denoted as information elements to be stored in this example. The sequence starts with a first bit **101** having a value of zero, and ends with a 64-th bit **102** having a value of one. Note that the methods proposed here can be applied to arbitrarily long sequences. For that, one simply has to assume that sequences that are longer than the block size are subdivided into an integer number of blocks plus a remainder part if the sequence length isn't an integer multiple of the block size. A remainder part, if required, can simply be filled with stuffing information elements up to the block size to make it apt to be treated same as the other blocks.

**Fig. 2** illustrates the example bit sequence of Fig. 1 when arranged into a two-dimensional block of 8x8 binary information elements. Of course, as mentioned, other block sizes, even non-square or non-constant, are also possible. The first bit **101** of the sequence is arranged into the first position **201** of the top row **202**, and the 64-th bit **102** is arranged into the 8-th position **203** of the bottom row **204**. Note the sixth position **205** of the sixth row **206**, which corresponds to the 46-th bit **103** of the example bit sequence **100.**

**Fig. 3** illustrates the outcome when the values shown in Fig. 2 are scaled to a symmetric range of [-1 ... +1]. This scaling, equivalent to subtracting 0.5 followed by a multiplication by 2, is not technically necessary, but having values symmetric to zero may make the example more illustrative. In particular, the value in the sixth position **305** of the sixth row **306** is now -1.

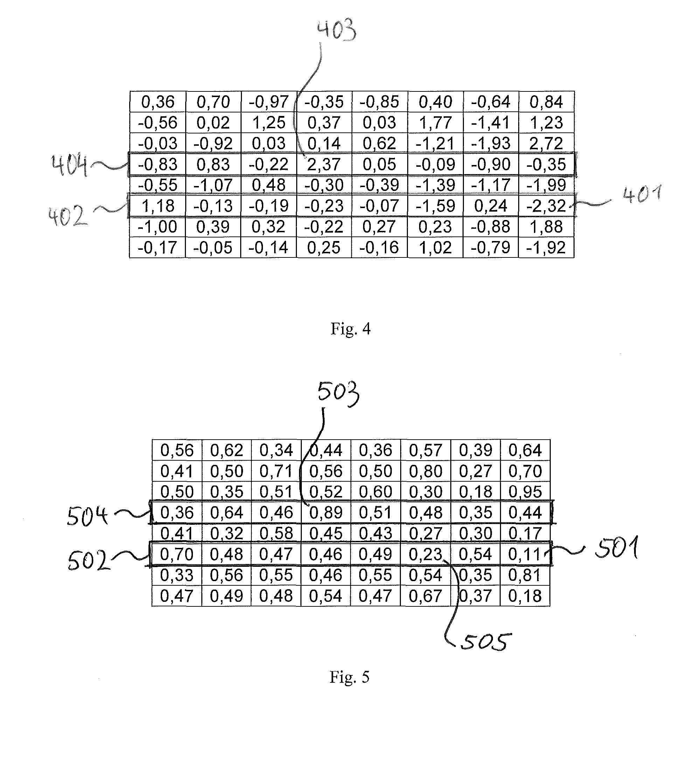

**Fig. 4** illustrates the transform domain elements that result when applying an 8x8 IDCT on the block of scaled values shown in Fig. 3. With respect to scaling, the IDCT used here is as most commonly found. It turns out that, for the given input, the values of the IDCT output are approximately within an interval of [-3 ... +3]. Using the IDCT as transform corresponds to interpreting the information elements as transform coefficients, each indicating and controlling how much an associated basis function shall be present in a block. With other words: The output block of the transform equals a weighted sum of basis functions, where the weight of each basis function is derived from the value of the associated information element. The basis functions and the information elements are allocated to each other according to their position within the block. For the data of the example, the values of the transform domain elements range from -2.32, as found in the eigth position **401** of the sixth row **402**, to +2.37, as found in the fourth position **403** of the fourth row **404**.

With other words: The data bits that shall be stored are used as amplitudes in the frequency domain, which are transformed by an inverse DCT into a spatial domain pattern. It is this spatial domain pattern that is being stored on the two dimensional medium or data carrier. The pattern is read back later and is then transformed back into the frequency domain, so that from the recovered basis function amplitudes the data bits can be retrieved.

In the embodiment considered here, the information elements are assumed to be binary i.e. bi-level and are represented as values of either -1 or +1. In the transform used to derive Fig. 4, these values have directly been used as weights on the basis functions, so that each basis function is contained in the final output with either a positive amplitude or with a negative amplitude. In other embodiments it may be advantageous if the basis function is either present with a positive amplitude or not present at all, which is equivalent to using 0 and +1 as weights.

**Fig. 5** illustrates the transform domain elements of Fig. 4 after a scaling that makes them somewhat commensurate with the original information elements as shown in Fig. 2. In that way, the influence of errors can best be compared. The values now range from 0.11, as found in the eighth position **501** of the sixth row **502**, to 0.89, as found in the fourth position **503** of the fourth row **504**. It is this sequence shown in Fig. 5 that serves as recording elements to be stored at the surface of the data carrier. Conceptually, if these recording elements are read back perfectly, scaled back to a range of approximately [-3 ... +3], DCT transformed and scaled back from [-1 ... +1] to [0 ... 1], the result will be identical to the original data.

Now the effect of an isolated defect at the surface of the data carrier is compared, on one hand in a prior art system where the information elements are directly stored, versus on the other hand in a system according to the methods proposed here, where there is a transform / inverse transform pair between the information elements and the recording elements. To see the influence of an isolated random defect, it is arbitrarily assumed in the following that a distortion affects the element in the sixth line and the sixth column of the 8x8 block of the example. The amplitude of the distortion is assumed to be 60% of the signal amplitude.

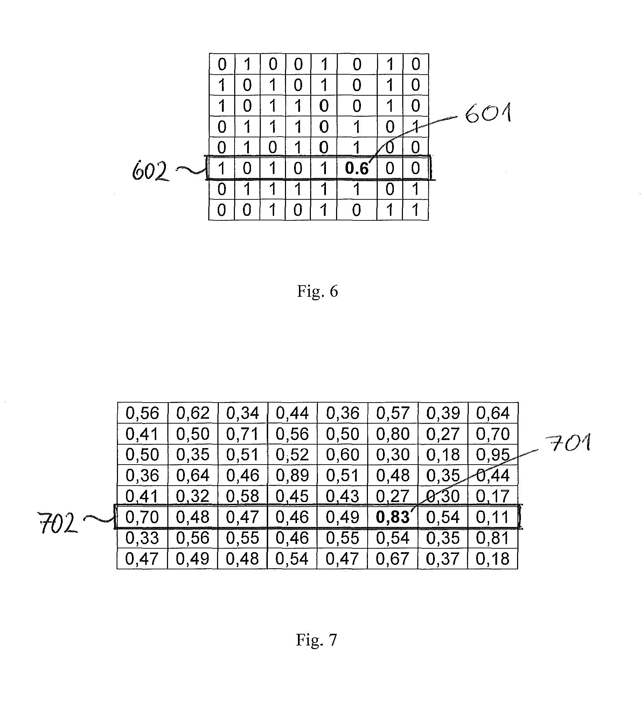

For the prior art case of directly storing the information elements as recording elements, **Fig. 6** illustrates the outcome if the block of binary information elements shown in Fig. 2 suffers an isolated defect or error on the sixth element **601** of its sixth row **602.** The magnitude of the error is assumed to be 0.6 of the full amplitude, turning the recording element that originally had a value of "0" corresponding to logical "false" into a value of 0.6. Under threshold quantization that considers any value below 0.5 as logical "false" and anything else as "true", this value would be decoded as "1" or "true", which is a one bit error compared to the original data.

Next the effect of the same defect will be considered in a system using the methods as proposed here. If the same distortion is applied to the transformed signal, the situation is different: **Fig. 7** illustrates the outcome if the recording elements being the transform domain elements of Fig. 5 suffer the same isolated error on the sixth coefficient **701** of the sixth row **702**. The original amplitude value 0.23 of the sixth coefficient **505** of the sixth row **502** is destroyed into a value of 0.83; all other coefficients remain unchanged.

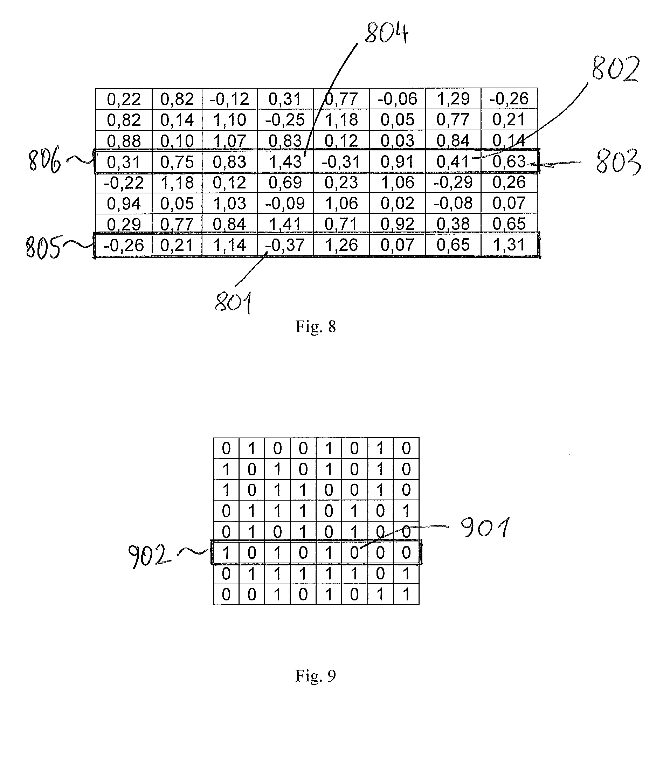

**Fig. 8** illustrates the original domain elements that result from scaling the values of Fig. 7 back to the range of [-3... +3], applying an 8x8 DCT, and performing the inverse of the scaling that had mapped [0 ... 1] to [-1 ... +1]. The DCT is the inverse of the IDCT that was employed as transform in transforming the values shown in Fig. 3 into those shown in Fig. 4. Comparing the values shown in Fig. 8 with those shown in Fig. 2 shows the influence that the single defect in the frequency domain has in the original domain. None of the information elements remains unchanged, but the errors are smaller.

Inspecting the original domain elements at those positions within the block which originally had a value of 0, one sees that the errors caused by the defect on the sixth coefficient **701** of the sixth row **702** range between -0.37 as seen at the fourth element **801** of the eighth row **805**, and +0.41 as seen at the seventh element **802** of the fourth row **806**. Inspecting the original domain elements at those positions which originally had a value of 1, one sees that the errors caused by the defect range between -0.37 as seen at the eighth element **803** of the fourth row **806** and +0.43 as seen at the fourth element **804** of the fourth row **806**. Given these error ranges, it is easy to see that under quantization with a threshold of 0.5, all errors are quantized away.

**Fig. 9** illustrates the recovered information element values that result from quantizing the original domain element values of Fig. 8. The values are identical to the original information element values as shown in Fig. 2. In particular, the recovered information element at the sixth position **901** of the sixth row **902** has been decoded as "0" corresponding to logical "false", which is the original value.

So, under the inverse transform being used in converting recording elements back into information elements, the singular distortion on the data carrier was spread, in the original domain, over all values of the block. This has the effect that the amplitude of the distortion on each individual element is reduced in such a way as to enable error free decoding with a threshold quantizer.

In the example a block size of 8x8 is chosen. Of course other block sizes, larger or smaller, two-dimensional or other-dimensional, can be used as well. Using larger blocks of e.g. 16x16 or 32x32 elements is advantageous if the storage medium is known to have defects with high amplitude but very low probability. In this case it can be assumed that, even for a larger block, no more than a single defect falls within one block. A high amplitude distortion on a single coefficient will then be inverse transformed to many but small distortions on each of the numerous block elements.

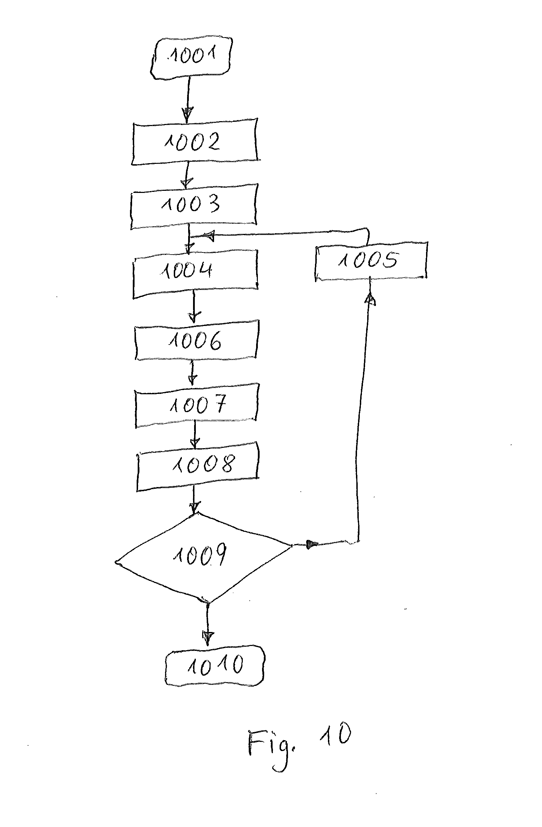

**Fig. 10** shows a flowchart of the storing method. After the start **1001** of the method, data are rearranged **1002** into blocks. Then the first block is selected **1003**. The data of the block may be scaled **1004** from the [0 ... 1] representation to a [-1 ... +1] representation. The possibly scaled data are then transformed **1006** into transform domain elements. The transform domain elements may be scaled **1007** again, to bring them into the [0 ... +1] range or into any other range that is suitable for the physical writing process. The thus scaled data are stored in the sense of written **1008** at the surface of the data carrier. Next there is a loop control **1009** testing whether all blocks have been stored. If not, the next block is selected **1005**, and the control flow continues with the scaling **1004** etc. If all blocks have been stored, the method ends **1010**.

Note that the scaling operations **1004**, **1007** are optional: Depending on the chosen transform, scaling is not necessary at all or can be built into the transform or into the writing, respectively.

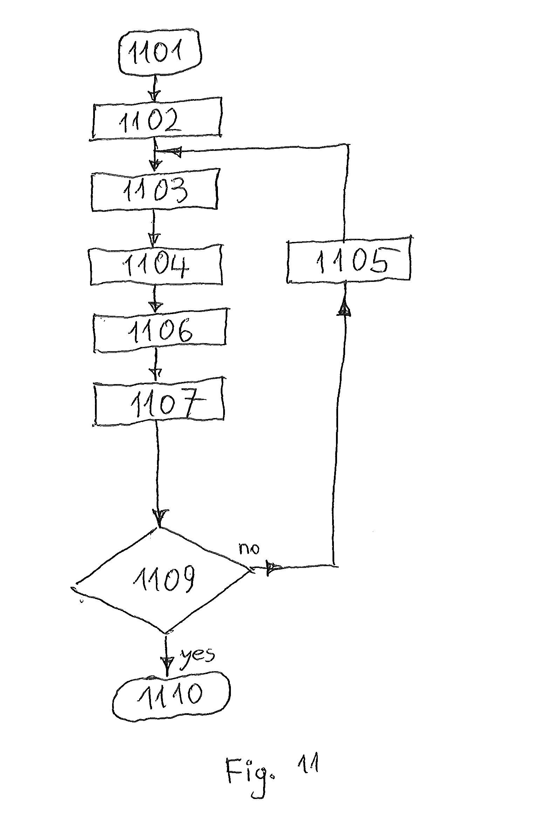

**Fig. 11** shows a flowchart of the readback method. After the start **1101** of the method, a first block of recovered recording elements is read **1102** from at the surface of the data carrier. The recovered recording elements may then be scaled **1103** from a [0 ... +1] range to whatever is suitable for the inverse transform. The block of possibly scaled recovered recording elements is then inverse transformed **1104** into a block of original domain elements. The original domain elements may next be scaled **1106** again, for instance from a [-1 ... +1] representation to a [0 ... 1] representation. Then the block of possibly scaled original domain elements is quantized **1107** and deblocked into recovered information elements. Next there is a loop control **1109** testing whether all blocks have been read back. If not, the next block of recovered recording elements is read **1105** from the data carrier, and the control flow continues with the scaling **1103** etc. If all blocks have been read back, the method ends **1110**.

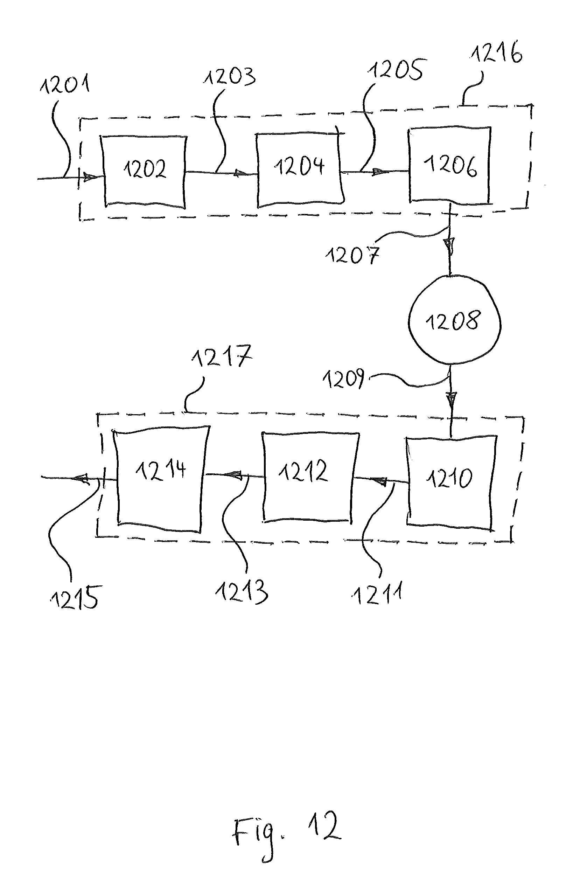

**Fig. 12** shows a block diagram of a storing apparatus **1216**, a data carrier **1208**, and a reading back apparatus **1217** in accordance with the present disclosure.

The storing apparatus **1216** comprises but is not limited to a block formatter **1202**, a transformer **1204**, and a writer **1206**.

The block formatter **1202** is equipped and configured to receive information elements **1201** and to format them into blocks of information elements **1203**. The transformer **1204** is equipped and configured to receive blocks of information elements **1203** and to transform them into blocks of recording elements **1205**. The writer **1206** is equipped and configured to receive blocks of recording elements **1205**, and to write them onto the data carrier **1208** in the form of writing data **1207**.

The reading back apparatus **1217** comprises but is not limited to a reader **1210**, an inverse transformer **1212**, and a block unformatter **1214**.

The reader **1210** is equipped and configured to derive, from readout data **1209** coming from the data carrier **1208**, recovered recording elements **1211**. The inverse transformer **1212** is equipped and configured to receive blocks of recovered recording elements **1211** and to inverse transform them into blocks of original domain elements **1213.** The block unformatter **1214** is equipped and configured to receive blocks of original domain elements **1213**, and to quantize and unblock them into recovered information elements **1215**.

In an embodiment for storing four level information elements each representing 2 bits, the value of the information element may determine whether the associated basis function of the transform is contained in the transform output with a weight or amplitude of -3, -1, +1, or +3. In another embodiment for storing the same kind of information elements, the basis function weights to choose from may be the set comprising 0, 1, 2, and 3.

In any case, due to the general concept of transforms, the data to be recorded, denoted as recording elements herein, are superpositions of basis functions of a block. As such, they are conceptually continuous-valued.

It is worth noting, that it is technically not necessary to use the same set of weight values for all basis functions. One advantageous use of this is as follows: If the storage channel of writing at the surface of the data carrier and reading back from at the surface of the data carrier is known to have, overall, a spatial low pass characteristic as is often the case, it may be advantageous to choose bigger amplitudes for basis functions that are more high frequency, such as to anticipate and neutralize, at least partially, their stronger attenuation by the storage channel. This is equivalent to using, on at least some information elements, a scaling factor whose value depends on the position of the information element within the block of information elements. In the corresponding readback method, then, the inverse transform must scale the corresponding output values with a scaling factor that depends on a frequency index to which they are allocated. This is equivalent to a scaling of at least some original domain elements with a scaling factor whose value depends on the position of the original domain element within the block of original domain elements.

With recording transform values instead of data themselves, any impulse noise on the medium will be inverse transformed to small errors on all samples of the data block. As long as there are not too many impulse noises in a block, the resulting errors will all be "quantized away" in the final threshold detection of the digital data. If there are sporadic distortions on the data carrier having a size similar to the size of the individual recording elements, due to the inverse transform, a single such distortion is transformed to several small distortions on the information elements, which after quantization don't harm the signal.

It is worthwhile to note, that the methods for storing and retrieving described so far do not preclude that additionally, Error Correcting Coding is used on the information elements to be stored. This means that, onto an assumed sequence of payload elements, redundancy may be added according to one of known ECC schemes. Depending on what is known as the "rate" of the employed Error Correcting Code, the data volume of the information elements will then be somewhat bigger than the data volume of the payload elements.

Further improvements are possible by departing from the principle that all information elements shall be error correction coded by the same ECC code. Assume that, for whatever reason, a certain one of the basis functions of the transform is known to be less well decodable than others. A stronger ECC may then be used on all those information elements that are associated with that basis function. A frequency dependent decodability of basis function amplitudes may for example occur due to impairments in the manufacturing process of the data carrier.

An embodiment of this approach may contain deriving, from the payload data, information elements associated with a specific position within the block by Error Correcting Coding with a code whose rate depends on the specific position within the block. Correspondingly, in the readback method, from the original domain elements associated with a specific position within the block, payload data are derived using ECC decoding where the underlying ECC code has a rate that depends on the position within the block.

For a very simple but illustrative example, a 1x4 block size is assumed in the following, and that the basis function associated to the fourth information element within each block is known to be less well decodable. A trivial ECC of repeating every payload bit three times is assumed to be used on the information elements at the fourth position within each block. No ECC is assumed to be used on the information elements at the first, second, and third positions within each block. An 1x4 IDCT is assumed to be used as the transform, where the first information element in each block steers the amplitude of the lowest frequency basis function, and the fourth information element in each block steers the amplitude of the highest frequency basis function. Denoting consecutive payload bits as p1, p2, p3, etc, the sequence of information elements derived therefrom will then be (p1, p2, p3, p4), (p5, p6, p7, p4), (p8, p9, p10, p4), (p11, p12, p13, p14), (p15, p16, p17, p14), etc. With other words, the lowest frequency basis function in consecutive blocks will convey the information elements p1, p5, p8, p11, p15 etc; and the highest frequency basis function in consecutive blocks - assumed to be less well decodable - will convey the information elements p4, p4, p4, p14, p14, etc. It is clearly visible that the triple repetition of the information elements to be detected from the highest frequency basis function allows ECC decoding by majority decision that counteracts the supposed worse decodability of the highest frequency basis function.

Note that the concepts of using ECC with a block position dependent code rate and using block position dependent basis function weights can be employed independently or in combination.

As yet another alternative embodiment, no information element may be associated to a specific one or to several specific ones of the transform basis functions, if that specific basis function or these specific basis functions, for example because of its or their frequency content, is or are known to be badly decodable. For the example of an 8x8 transform, if one of the 64 basis functions is known to be very badly decodable, 63 information elements each are associated with the other 63 of the 64 basis functions of the transform, leaving out the badly decodable basis function. Of course this entails that for storing a specific amount of information elements, around 64/63 times more recording element blocks are needed than in a system where all basis functions are employed.

With other words, for storing digital data at a surface of a data carrier 1208, it is proposed to use a block-wise transform pair 1204, 1212 between a spatial domain and a frequency domain to convert between information elements 1203, 1213 and recording elements 1205, 1211 at the surface of the data carrier 1208. This enables that isolated strong data carrier defects affecting a single recording element in a block are converted to smaller amplitude errors on all information elements of a block. For non-continuous-valued information elements 1203, these errors can be removed by quantization 1214.

## Claims

1. A method for storing digital information elements (1201) at a surface of a data carrier (1208), the method comprising:
- arranging (1002, 1202) the information elements (1201) into blocks of information elements (1203);
- transforming (1006) the blocks of information elements (1203) with an IDCT-like transform (1204) into continuous-valued recording elements (1205);
- storing (1008, 1206) the continuous-valued recording elements (1205) at the surface of the data carrier (1208).

2. The method according to Claim 1, wherein transforming (1006) comprises scaling at least some of the information elements with a scaling factor whose value depends on the position of the information element within the block of information elements (1203).

3. The method according to Claim 1 or Claim 2, used for storing payload elements, and additionally comprising:
- ECC coding, into blocks of information elements (1203), the payload elements with an ECC code whose rate depends on a position of the information element within the block of information elements (1203).

4. The method according to one of Claims 1 to 3, where in the step of arranging (1002, 1202), no information elements are arranged into a specific position within the block, so that the number of information elements arranged into a block is less than the number of positions of the block.

5. A method for reading back digital recovered information elements (1215) from at a surface of a data carrier (1208), the method comprising:
- reading (1102), from at the surface of the data carrier (1208), blocks of recovered continuous-valued recording elements (1211);
- inverse transforming (1104) the blocks of recovered continuous-valued recording elements (1211) with a DCT-like transform (1212) into blocks of original domain elements (1213);
- quantizing (1107) the blocks of original domain elements (1213) into the recovered information elements (1215).

6. The method according to Claim 5, wherein inverse transforming (1104) comprises scaling at least some of the original domain elements with a scaling factor whose value depends on a position of the original domain element within the block of original domain elements (1213).

7. The method according to Claim 5 or Claim 6, additionally comprising ECC decoding, into recovered payload elements, the original domain elements according to an ECC code whose rate depends on a position of the original domain element within the block of original domain elements (1213).

8. A method according to one of Claims 5 to 7, where quantizing (1107) comprises recovering recovered information elements (1215) from all but specific ones of the positions within the block of original domain elements (1213), so that from the block of original domain elements (1213), a number of information elements (1215) is recovered that is less than the number of positions of the block.

9. A storing apparatus (1216) for storing digital information elements (1201) at a surface of a data carrier (1208), comprising a block formatter (1202), a transformer (1204), and a writer (1206), wherein the block formatter (1202) is equipped and configured to receive information elements (1201) and to format them into blocks of information elements (1203), the transformer (1204) is equipped and configured to receive blocks of information elements (1203) and to transform them into blocks of continuous-valued recording elements (1205), and the writer (1206) is equipped and configured to receive blocks of continuous-valued recording elements (1205), and to write them onto the data carrier (1208) at its surface.

10. The apparatus according to Claim 9, where the transformer (1204) is equipped and configured to scale at least some of the information elements with a scaling factor whose value depends on the position of the information element within the block of information elements (1203).

11. The apparatus according to Claim 9 or Claim 10, used for storing payload elements, and additionally comprising an ECC coder equipped and configured to ECC code, into blocks of information elements (1203), the payload elements with an ECC code whose rate depends on a position of the information element within the block of information elements (1203).

12. The apparatus according to one of Claims 9 to 11, wherein the block formatter (1202) is equipped and configured to arrange information elements onto all but specific ones of the positions within the blocks of information elements (1203), so that the number of information elements arranged into a block is less than the number of positions of the block.

13. A reading back apparatus (1217) for reading back digital recovered information elements (1215) from at a surface of a data carrier (1208) comprising a reader (1210), an inverse transformer (1212), and a block unformatter (1214), wherein the reader (1210) is equipped and configured to read out from at a surface of the data carrier (1208) recovered continuous-valued recording elements (1211), the inverse transformer (1212) is equipped and configured to receive blocks of recovered continuous-valued recording elements (1211) and to inverse transform them into blocks of original domain elements (1213), and the block unformatter (1214) is equipped and configured to receive blocks of original domain elements (1213), and to quantize and unblock them into recovered information elements (1215).

14. The apparatus according to Claim 13, wherein the inverse transformer (1212) is equipped and configured to scale at least some of the original domain elements with a scaling factor whose value depends on a position of the original domain element within the block of original domain elements (1213).

15. The apparatus according to Claim 13 or Claim 14, used for reading back payload elements, and additionally comprising an ECC decoder equipped and configured to ECC decode into recovered payload elements, the original domain elements according to an ECC code whose rate depends on a position of the original domain element within the block of original domain elements (1213).

16. The apparatus according to one of Claims 13 to 15, wherein the block unformatter (1214) is equipped and configured to recover recovered information elements (1215) from all but specific ones of the positions within a block of original domain elements (1213), so that from the block of original domain elements (1213), a number of information elements (1215) is recovered that is less than the number of positions of the block.
